# FASCICULE DE BREVET EUROPEEN

(11) **EP 2 182 334 B1**
(45) Date de publication et mention de la délivrance du brevet: **11.09.2013**
(21) Numéro de dépôt: 09174748.5
(22) Date de dépôt: 02.11.2009
(51) Int. Cl.: G01H 3/12, G03H 3/00

(54) **Dispositif de mesure et de représentation des sources de bruit à l'intérieur d'un espace**
Vorrichtung zum Messen und Darstellen der Geräuschquellen innerhalb eines Raums
Device for measuring and representing noise sources inside a space

(30) Priorité: 03.11.2008 FR 0806102
(43) Date de publication de la demande: 05.05.2010
(73) Titulaire: MICRODB, 69130 Ecully (FR)
(72) Inventeur: Robin, Maxime, 69300 Caluire et Cuire (FR); Beguet, Bernard, 69210 Saint Bel (FR)
(74) Mandataire: Maureau, Philippe

(56) Documents cités:
- EP-A- 1 331 490
- VAUCHER DE LA CROIX D ET AL: "HOLOGRAPHIE ACOUSTIQUE APPLIQUEE A DES MESURES INTERIEURES 3D EN HABITACLE" INGENIEURS DE L'AUTOMOBILE, EDITIONS VB, GARCHES, FR, no. 741, 1 novembre 2000 (2000-11-01), pages 132-136,139, XP000987553 ISSN: 0020-1200
- BELSAK A ET AL: "Visualisation and analysis of noise sources of a gear unit" ENGINEERING FAILURE ANALYSIS, PERGAMON, GB, vol. 16, no. 5, 1 juillet 2009 (2009-07-01), pages 1570-1578, XP026046282 ISSN: 1350-6307 [extrait le 2008-11-05]

## Description

L'invention concerne un dispositif de mesure et de représentation des sources de bruit à l'intérieur d'un espace délimité par une surface ainsi qu'un procédé correspondant.

Le confort acoustique à l'intérieur d'une enceinte, et notamment d'un habitacle de véhicule, tel que véhicule automobile ou train, est devenu un enjeu concurrenciel. Pour l'optimiser, il est nécessaire de connaître l'importance du rayonnement sonore des différents panneaux de l'habitacle, tels que vitre ou hublot, surface habillée... pour réaliser des traitements d'isolation acoustique là où cela est nécessaire.

A cet effet, il convient de disposer de moyens permettant de localiser les sources de bruit, ainsi que l'intensité sonore de telles sources.

Un dispositif de mesure et de représentation des sources de bruit dans l'habitable d'un véhicule est présenté dans l'article de D. Vaucher de la Croix et al., Holographie acoustique appliquée à des mesures intérieures 3D en habitable, Ingénieurs de l'Automobile, p.132-136,139, Nov. Dec. 2000.

Un dispositif de mesure et de représentation des sources de bruit est connu du document EP 1 557 688.

Ce document décrit un dispositif de mesure, destiné à être disposé dans un espace délimité par une surface, comportant une pluralité de microphones disposés sur un support sphérique et permettant de générer un hologramme des sources de bruit, c'est-à-dire une représentation de la répartition des pressions et/ou intensités acoustiques.

L'hologramme permet d'identifier facilement les sources de bruits à l'intérieur de l'espace.

Afin d'effectuer la corrélation entre les sources de bruits visibles sur l'hologramme et les zones de la surface générant ce bruit, il est utile d'effectuer une représentation tridimensionnelle de la surface de l'espace, et d'y appliquer ou superposer l'hologramme. Il est alors possible, à l'aide de l'hologramme, d'identifier la position des sources de bruits, et de déterminer, à l'aide de la représentation de la surface, l'élément de la surface générant ce bruit.

Afin qu'une telle méthode d'identification des sources de bruit soit exploitable, il est nécessaire que la représentation tridimensionnelle de la surface soit la plus fidèle possible, et que l'hologramme soit correctement positionné par rapport à la représentation tridimensionnelle.

Une première méthode connue consiste à utiliser des représentation réalisées à l'aide de géométries maillées, fournies par les constructeurs, d'effectuer la mesure acoustique, par exemple à l'aide d'un dispositif du type de celui exposé dans le document EP 1 557 688, d'obtenir un hologramme des sources de bruit et d'appliquer ledit hologramme sur la géométrie.

Cette méthode pose les problèmes suivants.

Tout d'abord, pour des raisons de confidentialité, les constructeurs sont peu enclins à fournir les plans et représentations de leurs véhicules ou appareils. De plus, les géométries fournies utilisent généralement un maillage fin, difficile à exploiter en tant que tel pour des raisons de complexité de calcul. Il est alors nécessaire d'épurer les maillages des géométries, ce qui est long, fastidieux, et risque de générer des géométries peu fidèles à la réalité.

Enfin, le positionnement du dispositif de mesure, et donc de l'hologramme, par rapport à la géométrie de la surface, est difficile à déterminer avec précision. En effet, il faut mesurer les 6 degrés de liberté (trois rotations et trois translations) du dispositif de mesure.

Une deuxième méthode consiste à calculer le champ acoustique sur des surfaces de calcul virtuelles simplifiées. La géométrie réelle de l'espace n'est alors pas prise en compte et des erreurs de calcul peuvent être commises. Des prises de vue de l'espace sont appliquées sur les surfaces de calcul, de manière à former une texture.

On rappelle qu'une texture est une représentation d'une surface, permettant de simuler l'apparence de celle-ci quand on l'applique ou qu'on la « colle » sur un objet ou une géométrie tridimensionnelle.

Des discontinuités ou des distorsions entre les prises de vue et l'hologramme apparaissent, ce qui perturbe la localisation et la visualisation précise des sources de bruit.

Une troisième méthode consiste à déplacer manuellement une antenne acoustique intégrant un système de positionnement. La géométrie de calcul générée est constituée d'un ensemble de plans de la taille de l'antenne, trop grossiers pour effectuer une localisation précise des sources de bruits. En outre, aucune texture n'est appliquée sur la géométrie ainsi obtenue, ce qui rend difficile la visualisation et la localisation des sources de bruit. Enfin, cette méthode pose des problèmes de resynchronisation des positions de l'antenne lorsque l'espace de mesure est en mouvement.

L'invention vise à remédier à ces inconvénients en proposant un dispositif de mesure et de représentation des sources de bruit à l'intérieur d'un espace délimité par une surface, qui permette d'obtenir une visualisation précise des sources de bruit, et de manière simple.

A cet effet, l'invention concerne un dispositif de mesure et de représentation des sources de bruit à l'intérieur d'un espace délimité par une surface, **caractérisé en ce qu**'il comporte
un ensemble mobile comprenant un capteur dimensionnel associé à des moyens de prise d'images, l'ensemble mobile étant conçu pour balayer au moins une partie de l'espace, de manière à ce que, lors du balayage, le capteur dimensionnel détermine la position d'une pluralité de points de la surface, et que les moyens de prise d'image enregistrent au moins une image d'une zone de ladite surface, chaque image étant associée à au moins une coordonnée permettant de déduire la position de l'image par rapport à la surface,
des moyens conçus pour reconstituer la géométrie tridimensionnelle de la surface délimitant l'espace, à partir des mesures issues du capteur dimensionnel, et pour appliquer sur ladite géométrie une texture formée par l'assemblage des images, chaque image étant positionnée sur ladite géométrie en fonction des coordonnées associées,
un système de mesure acoustique ou vibratoire, dont la position par rapport à l'ensemble mobile est déterminée,
des moyens de génération d'un hologramme des sources de bruit, c'est-à-dire d'une répartition des pressions, intensités ou accélérations acoustiques ou vibratoires en différents points de la surface, à partir des mesures effectuées par le système de mesure acoustique ou vibratoire,
des moyens conçus pour appliquer l'hologramme des sources de bruit sur la géométrie calculée de la surface et sur la texture, de manière à obtenir une représentation des sources de bruit à l'intérieur de l'espace.

De cette manière, une représentation réaliste de la surface peut être obtenue, cette représentation comportant les informations relatives, d'une part, à la géométrie de la surface et, d'autre part, à la texture de celle-ci. Le nombre de points mesurés est déterminé de manière à ce qu'il soit suffisamment important pour offrir une représentation fidèle de la géométrie de la surface, mais suffisamment faible pour faciliter le calcul.

En outre, la position du dispositif de mesure vis-à-vis du capteur dimensionnel étant connue, l'hologramme généré par le dispositif de mesure peut être positionné avec précision à l'aide du capteur dimensionnel.

On obtient alors finalement une représentation précise et fidèle des sources de bruit et de l'espace dans lequel est effectuée la mesure. La localisation des sources de bruit est donc largement facilitée.

L'ensemble mobile peut être ou non être distinct du système de mesure. Dans le cas où ceux-ci sont distincts l'un de l'autre, l'ensemble mobile peut ou non être retiré de l'espace lorsque la mesure est effectuée à l'aide du système de mesure.

Selon une caractéristique de l'invention, l'ensemble mobile comporte une base fixe sur laquelle est monté un support articulé, le capteur dimensionnel et les moyens de prise d'images étant montés sur le support articulé.

Avantageusement, le support articulé comporte un premier bras monté pivotant sur la base, autour de l'axe longitudinal du premier bras, et un second bras monté pivotant sur le premier bras, autour d'un axe perpendiculaire à l'axe du premier bras.

Cette disposition permet de balayer la totalité de l'espace à l'aide d'une articulation ne comportant que deux degrés de liberté. Un nombre réduit de degrés de liberté permet de faciliter les calculs de positionnement des points balayés.

Selon une possibilité de l'invention, le système de mesure comporte une pluralité de capteurs de champ vibratoire et/ou acoustique, orientés suivant plusieurs directions et montés dans un support sphérique.

Préférentiellement, les capteurs de champ vibratoire et/ou acoustique sont des vibromètres laser et/ou des microphones.

Selon une caractéristique de l'invention, le support sphérique est fixé sur le support articulé.

De cette manière, l'ensemble mobile et le système de mesure forment un seul et même dispositif, ce qui facilite le positionnement de l'un par rapport à l'autre. On obtient alors un unique dispositif permettant à la fois d'effecteur les mesures dimensionnelles et acoustiques ou vibratoire à l'intérieur de l'espace. Les manipulations lors de la mesure sont ainsi limitées.

Avantageusement, le capteur dimensionnel et les moyens de prise d'images sont montés au niveau de la surface externe du support sphérique.

Compte tenu des longueurs d'ondes à mesurer, le fait que les moyens de prise d'images et le capteur dimensionnel fassent saillie du support sphérique ne perturbe pas ou peu la mesure acoustique ou vibratoire effectuée.

Selon une forme de réalisation de l'invention, le capteur dimensionnel est un capteur laser, à infrarouges ou à ultrasons, permettant de déterminer la distance entre le point correspondant de la surface et ledit capteur.

Selon une autre forme de réalisation de l'invention, le capteur dimensionnel comporte au moins deux caméras et des moyens de traitement des données aptes à recueillir les données issues des caméras et calculer, par stéréoscopie, la position de chaque point balayé.

Préférentiellement, les moyens de prise d'image comportent une caméra numérique.

L'invention concerne en outre un procédé de mesure et de représentation des sources de bruit à l'intérieur d'un espace délimité par une surface, **caractérisé en ce qu**'il comporte les étapes suivantes :
- positionner, à l'intérieur de l'espace, un ensemble mobile comportant un capteur dimensionnel associé à des moyens de prise d'images,
- balayer au moins une partie de l'espace à l'aide de l'ensemble mobile, de manière à ce que, lors du balayage, le capteur dimensionnel détermine la position d'une pluralité de points de la surface, et que les moyens de prise d'image enregistrent au moins une image d'une zone de ladite surface, chaque image étant associée à au moins une coordonnée permettant de déduire la position de l'image par rapport à la surface,
- reconstituer la géométrie tridimensionnelle de la surface et appliquer sur ladite géométrie une texture formée par l'assemblage des images, chaque image étant positionnée sur ladite géométrie en fonction des coordonnées associées,
- effectuer une mesure acoustique ou vibratoire à l'aide d'un système de mesure disposé à l'intérieur de l'espace et dont la position est connue par rapport à l'ensemble mobile,
- générer un hologramme des sources de bruit, c'est-à-dire une répartition des pressions, intensités ou accélérations acoustiques ou vibratoire en différents points de la surface, à partir des mesures effectuées par le système de mesure,
- appliquer l'hologramme des sources de bruit sur la géométrie calculée de la surface et sur la texture, de manière à obtenir une représentation des sources de bruit à l'intérieur de l'espace.

De toute façon l'invention sera bien comprise à l'aide de la description qui suit, en référence aux dessins schématiques annexés, représentant, à titre d'exemple non limitatif, une forme de réalisation de ce dispositif.
Figure 1 est une vue de face d'un ensemble mobile et d'un système de mesure à l'intérieur d'un espace ;
Figure 2 est une représentation schématique d'un dispositif de mesure et de représentation des sources de bruit selon l'invention ;
Figure 3 est une représentation schématique du procédé selon l'invention ;
Figure 4 est une représentation graphique de la géométrie d'un espace ;
Figure 5 est une représentation graphique de ladite géométrie, sur laquelle ont été appliquées une texture et un hologramme des sources de bruit.

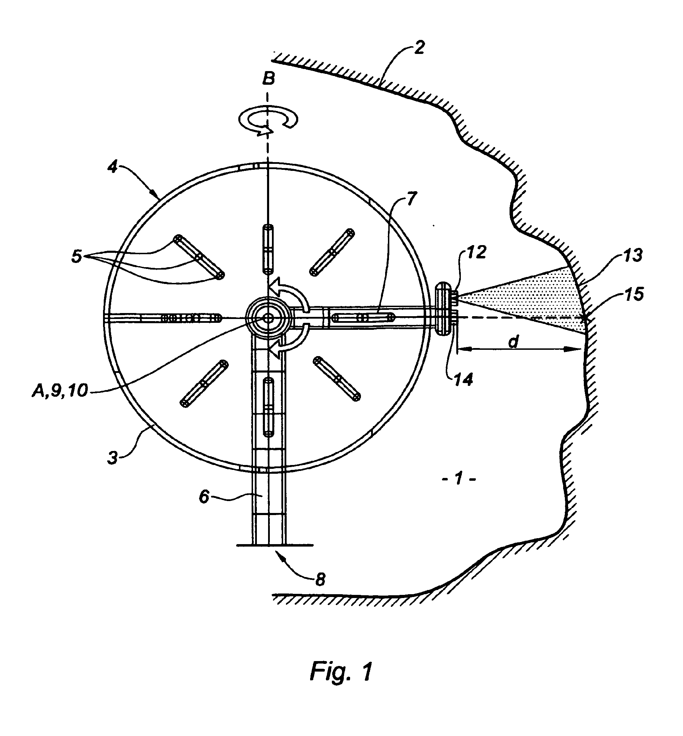

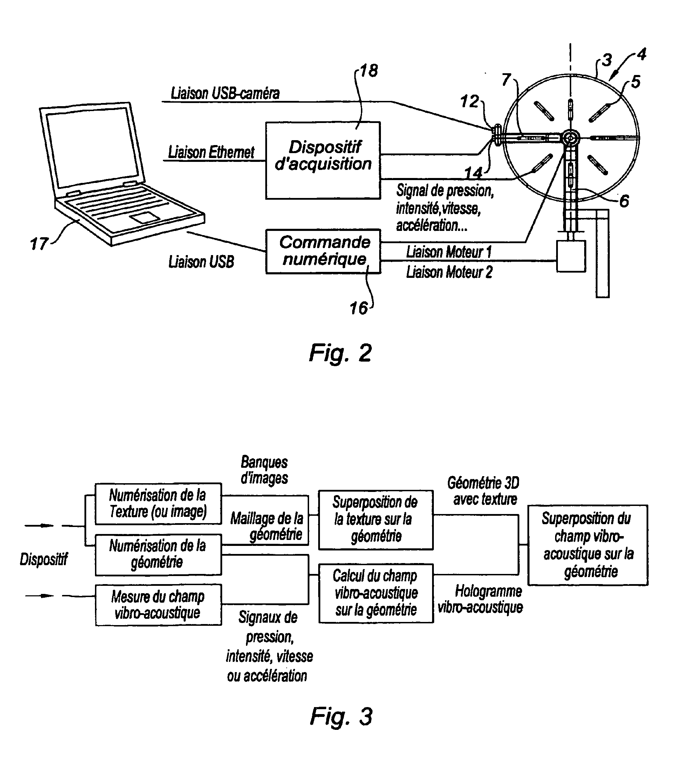

Les figures 1 et 2 représentent un système de mesure acoustique disposé à l'intérieur d'un espace 1 délimité par une surface 2. Le système de mesure acoustique comporte un support sphérique 3, de centre A et réalisé en matériau rigide, dont la surface extérieure 4 peut être revêtue d'un matériau absorbant.

A l'intérieur du support sphérique 3 sont montés des microphones 5 qui affleurent chacun la surface extérieure 4.

Un tel système de mesure est similaire à celui décrit dans le document EP 1 557 668.

Le support sphérique 3 est monté sur un support articulé comportant un premier bras et un second bras 6, 7.

Le premier bras 6 comporte une première extrémité 8 montée pivotante, autour de l'axe longitudinal B du bras, sur une base fixe (non représentée), et une seconde extrémité 9 disposée au centre A du support sphérique 3.

Une première extrémité 10 du second bras 7 est monté pivotant sur la seconde extrémité 9 du premier bras 6, autour d'un axe perpendiculaire à l'axe B du premier bras 6 et passant par le centre A.

Le second bras 7 s'étend à l'intérieur du support sphérique 3, depuis le centre A de celui-ci, et débouche, à une seconde extrémité 11, à l'extérieur de celui-ci et à proximité de la surface externe 4.

La seconde extrémité 11 du second bras 7 porte une caméra numérique 12, apte à prendre une image d'une zone 13 de la surface. La seconde extrémité 11 porte en outre un capteur dimensionnel 14 de type capteur laser, à infrarouges ou à ultrasons, apte à mesurer la distance d entre le capteur 14 et le point correspondant 15 de la surface.

Les articulations des bras 6, 7 sont motorisées et actionnées à l'aide d'une commande numérique 16 (voir figure 2), reliée à un ordinateur par une liaison USB.

De même, la position angulaire de chaque articulation, c'est-à-dire de chaque liaison pivot, peut être enregistrée par l'intermédiaire d'un dispositif d'acquisition numérique 18, relié à l'ordinateur 17 par une liaison Ethernet.

Les signaux issus des microphones 5 sont également numérisés puis traités à l'aide du dispositif d'acquisition 18 et de l'ordinateur 17.

Enfin, la caméra 12 est elle-même reliée à l'ordinateur 17 par une liaison USB.

Le fonctionnement de ce dispositif va maintenant être décrit plus en détail, en référence à la figure 3.

Les moteurs sont actionnés de manière à diriger le capteur dimensionnel 14 et la caméra 12 en direction d'un point 15 de la surface 2.

Les coordonnées relatives de ce point 15 sont déduites par la rotation des articulations des bras 6, 7 et par la mesure de la distance d entre le capteur 14 et le point 15 visé par celui-ci.

La caméra 12 prend une image de la zone correspondante 13 de la surface 2, située autour du point visé 15. L'image est associée, par traitement informatique, aux coordonnées du point visé 15.

Ensuite, les moteurs sont à nouveau actionnés de manière à diriger le capteur dimensionnel 14 et la caméra 12 en direction d'un autre point, écarté du précédent.

Les positions des points visés 15 sont calculées de manière à former un maillage régulier de la surface 2, la surface étant alors balayée en tenant compte des points du maillage préalablement déterminés.

On obtient alors une base de données comportant les coordonnées de l'ensemble des points 15 du maillage ainsi qu'une multitude d'images associées à chacun des points.

Selon une possibilité de l'invention, on réalise un nombre d'images inférieur au nombre de points du maillage, dans la mesure où il existe un recouvrement suffisant de deux images voisines. Dans ce cas toutefois, on veillera à ce que le nombre d'images soit suffisant pour permettre d'obtenir une texture et un rendu réaliste.

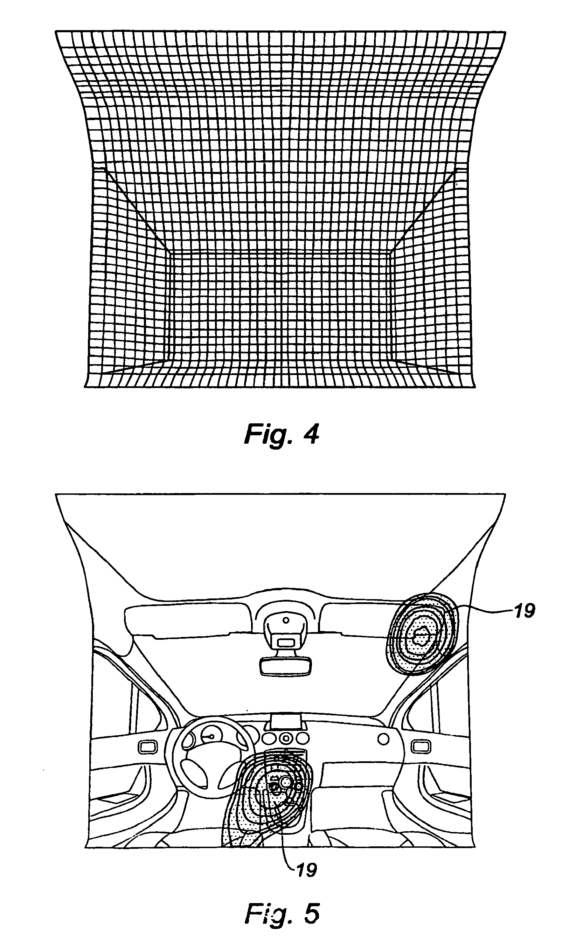

La géométrie tridimensionnelle de la surface 2 est alors reconstruite à partir des coordonnées dans l'espace de chaque point 15, comme illustré à la figure 4.

En outre, les images sont assemblées de manière à former une texture qui est apposée ou appliquée contre la géométrie de la surface.

De cette manière, on crée une représentation réaliste de la surface.

Ensuite, le support sphérique est repositionné puis une mesure acoustique est effectuée à l'aide des microphones.

Durant cette mesure, l'ordinateur réalise une acquisition des signaux issus des microphones 5. Les signaux sont traités, puis un hologramme des sources de bruit est généré.

On rappelle qu'un hologramme est une représentation visuelle des répartitions des pressions, intensités ou accélérations acoustiques ou vibratoires en différents points de la surface, à partir des mesures effectuées par le système de mesure acoustique ou vibratoire.

Dans le cas de l'exemple représenté aux figures, seuls sont relevées les pressions et les intensités acoustiques, les phénomènes vibratoires n'étant pas pris en compte.

Les méthodes d'obtention d'un hologramme à partir des signaux issus des microphones sont connues de l'homme du métier et ne sont pas détaillées ici.

L'hologramme ainsi obtenu est appliqué sur la géométrie tridimensionnelle et sur la texture. L'ensemble de ces informations, superposées les unes aux autres, permet d'obtenir la représentation illustrée à la figure 5.

On remarque que l'hologramme fournit une information précise sur la position des sources de bruit 19. En outre, la texture permet de déterminer quels sont les éléments générant un tel bruit.

On remarque que l'invention permet de localiser aisément et précisément les sources de bruit à l'intérieur d'un espace 1.

Cet espace 1 peut par exemple être l'habitacle d'un véhicule ou la soute d'un avion.

Dans le cas représenté aux figures, seules les champs acoustiques sont mesurés. Toutefois, les microphones 5 peuvent être remplacés par des capteurs de champ vibratoire, par exemple des vibromètres laser. Dans ce cas, il est possible de mesurer le champ vibratoire et ainsi générer un hologramme de répartition des intensités et/ou accélération vibratoires.

Comme il va de soi, la présente invention ne se limite pas à la seule forme d'exécution de ce dispositif, mais elle en embrasse, au contraire, toutes les variantes de réalisation et d'application respectant le même principe.

## Revendications

1. Dispositif de mesure et de représentation des sources de bruit (19) à l'intérieur d'un espace (1) délimité par une surface (2), **caractérisé en ce qu'**il comporte :
- un ensemble mobile comprenant un capteur dimensionnel (14) associé à des moyens de prise d'images (12), l'ensemble mobile étant conçu pour balayer au moins une partie de l'espace (1), de manière à ce que, lors du balayage, le capteur dimensionnel (14) détermine la position d'une pluralité de points (15) de la surface (2), et que les moyens de prise d'image (12) enregistrent au moins une image d'une zone (13) de ladite surface (2), chaque image étant associée à au moins une coordonnée permettant de déduire la position de l'image par rapport à la surface (2),
- des moyens (17) conçus pour reconstituer la géométrie tridimensionnelle de la surface (2) délimitant l'espace (1), à partir des mesures issues du capteur dimensionnel (14), et pour appliquer sur ladite géométrie une texture formée par l'assemblage des images, chaque image étant positionnée sur ladite géométrie en fonction des coordonnées associées,
- un système de mesure acoustique ou vibratoire (3, 5), destiné à être disposé à l'intérieur de l'espace (1), dont la position par rapport à l'ensemble mobile est déterminée,
- des moyens de génération d'un hologramme des sources de bruit (19), c'est-à-dire d'une répartition des pressions, intensités ou accélérations acoustiques ou vibratoires en différents points de la surface (2), à partir des mesures effectuées par le système de mesure acoustique ou vibratoire (3, 5),
- des moyens conçus pour appliquer l'hologramme des sources de bruit sur la géométrie calculée de la surface (2) et sur la texture, de manière à obtenir une représentation des sources de bruit à l'intérieur de l'espace (1).

2. Dispositif selon la revendication 1, **caractérisé en ce que** l'ensemble mobile comporte une base fixe sur laquelle est monté un support articulé (6, 7), le capteur dimensionnel (14) et les moyens de prise d'images (12) étant montés sur le support articulé (6, 7).

3. Dispositif selon la revendication 2, **caractérisé en ce que** le support articulé comporte un premier bras (6) monté pivotant sur la base, autour de l'axe longitudinal (B) du premier bras (6), et un second bras (7) monté pivotant sur le premier bras (6), autour d'un axe perpendiculaire à l'axe (B) du premier bras (6).

4. Dispositif selon l'une des revendications 1 à 3, **caractérisé en ce que** le système de mesure comporte une pluralité de capteurs de champ vibratoire et/ou acoustique (5), orientés suivant plusieurs directions et montés dans un support sphérique (3).

5. Dispositif selon la revendication 4, **caractérisé en ce que** les capteurs de champ vibratoire et/ou acoustique sont des vibromètres laser et/ou des microphones (5).

6. Dispositif selon l'une des revendications 4 ou 5, **caractérisé en ce que** le support sphérique (3) est fixé sur le support articulé (6, 7).

7. Dispositif selon la revendication 6, **caractérisé en ce que** le capteur dimensionnel (14) et les moyens de prise d'images (12) sont montés au niveau de la surface externe (4) du support sphérique (3).

8. Dispositif selon l'une des revendications 1 à 7, **caractérisé en ce que** le capteur dimensionnel (14) est un capteur laser, à infrarouges ou à ultrasons, permettant de déterminer la distance (d) entre le point correspondant (15) de la surface (2) et ledit capteur dimensionnel (14).

9. Dispositif selon l'une des revendications 1 à 7, **caractérisé en ce que** le capteur dimensionnel (14) comporte au moins deux caméras et des moyens de traitement des données aptes à recueillir les données issues des caméras et calculer, par stéréoscopie, la position de chaque point balayé.

10. Dispositif selon l'une des revendications 1 à 9, **caractérisé en ce que** les moyens de prise d'image comportent une caméra numérique (12).

11. Procédé de mesure et de représentation des sources de bruit (19) à l'intérieur d'un espace (1) délimité par une surface (2), **caractérisé en ce qu'**il comporte les étapes suivantes :
- positionner, à l'intérieur de l'espace (1), un ensemble mobile comportant un capteur dimensionnel (14) associé à des moyens de prise d'images (12),
- balayer au moins une partie de l'espace (1) à l'aide de l'ensemble mobile, de manière à ce que, lors du balayage, le capteur dimensionnel (14) détermine la position d'une pluralité de points (15) de la surface (2), et que les moyens de prise d'image (12) enregistrent au moins une image d'une zone (13) de ladite surface (2), chaque image étant associée à au moins une coordonnée permettant de déduire la position de l'image par rapport à la surface (2),
- reconstituer la géométrie tridimensionnelle de la surface (2) et appliquer sur ladite géométrie une texture formée par l'assemblage des images, chaque image étant positionnée sur ladite géométrie en fonction des coordonnées associées,
- effectuer une mesure acoustique ou vibratoire à l'aide d'un système de mesure (3, 5) disposé à l'intérieur de l'espace (1) et dont la position par rapport à l'ensemble mobile est déterminée,
- générer un hologramme des sources de bruit (19), c'est-à-dire une répartition des pressions, intensités ou accélérations acoustiques ou vibratoires en différents points de la surface (2), à partir des mesures effectuées par le système de mesure (3, 5),
- appliquer l'hologramme des sources de bruit sur la géométrie calculée de la surface (2) et sur la texture, de manière à obtenir une représentation des sources de bruit à l'intérieur de l'espace (1).

## Patentansprüche

1. Vorrichtung zum Messen und Darstellen der Geräuschquellen (19) innerhalb eines von einer Fläche (2) begrenzten Raums (1), **dadurch gekennzeichnet, dass** sie aufweist:
- eine mobile Gruppe, die einen Dimensionssensor (14) umfasst, der mit Bildaufnahmemitteln (12) verbunden ist, wobei die mobile Gruppe ausgebildet ist, um mindestens einen Abschnitt des Raums (1) derart abzutasten, dass der Dimensionssensor (14) beim Abtasten die Position einer Vielzahl von Punkten (15) der Fläche (2) bestimmt und dass die Bildaufnahmemittel (12) mindestens ein Bild einer Zone (13) der Fläche (2) registrieren, wobei jedes Bild mindestens einer Koordinate zugeordnet ist, was erlaubt, die Position des Bilds im Verhältnis zu der Fläche (2) abzuleiten,
- Mittel (17), die ausgebildet sind, um die dreidimensionale Geometrie der den Raum (1) begrenzenden Fläche (2) ausgehend von Messwerten des Dimensionssensors (14) zu rekonstruieren und um auf die Geometrie eine Textur anzuwenden, die von der Kombination der Bilder gebildet wird, wobei jedes Bild auf der Geometrie in Abhängigkeit der verbundenen Koordinaten positioniert ist,
- ein Akustik- oder Schwingungsmesssystem (3, 5), das dazu bestimmt ist, innerhalb des Raums (1) angeordnet zu sein, dessen Position im Verhältnis zu der mobilen Gruppe festgelegt ist,
- Mittel zur Erzeugung eines Hologramms der Geräuschquellen (19), das heißt, einer Verteilung der akustischen oder Schwingungsdrücke, -intensitäten oder -beschleunigungen an verschiedenen Punkten der Fläche (2) ausgehend von Messungen, die von dem Akustik- oder Schwingungsmesssystem (3, 5) durchgeführt werden,
- Mittel, die ausgebildet sind, um das Hologramm der Geräuschquellen auf die berechnete Geometrie der Fläche (2) und auf die Textur derart anzuwenden, um eine Darstellung der Geräuschquellen innerhalb des Raums (1) zu erhalten.

2. Vorrichtung nach Anspruch 1, **dadurch gekennzeichnet, dass** die mobile Gruppe eine feststehende Basis aufweist, auf der ein Gelenkhalter (6, 7) montiert ist, wobei der Dimensionssensor (14) und Bildaufnahmemittel (12) auf dem Gelenkhalter (6, 7) montiert sind.

3. Vorrichtung nach Anspruch 2, **dadurch gekennzeichnet, dass** der Gelenkhalter einen ersten Arm (6) aufweist, der um die Längsachse (B) des ersten Arms (6) schwenkbar auf der Basis montiert ist, und einen zweiten Arm (7), der um eine Achse senkrecht zur Achse (B) des ersten Arms (6) schwenkbar auf dem ersten Arm (6) montiert ist.

4. Vorrichtung nach einem der Ansprüche 1 bis 3, **dadurch gekennzeichnet, dass** das Messsystem eine Vielzahl von Schwingungsund/oder Akustikfeldsensoren (5) aufweist, die in mehreren Richtungen ausgerichtet und in einem kugelförmigen Halter (3) montiert sind.

5. Vorrichtung nach Anspruch 4, **dadurch gekennzeichnet, dass** die Schwingungs- und/oder Akustikfeldsensoren Laser-Schwingungsmesser und/oder Mikrophone (5) sind.

6. Vorrichtung nach einem der Ansprüche 4 oder 5, **dadurch gekennzeichnet, dass** der kugelförmige Halter (3) auf dem Gelenkhalter (6, 7) befestigt ist.

7. Vorrichtung nach Anspruch 6, **dadurch gekennzeichnet, dass** der Dimensionssensor (14) und die Bildaufnahmemittel (12) auf Ebene der externen Fläche (4) des kugelförmigen Halters (3) montiert sind.

8. Vorrichtung nach einem der Ansprüche 1 bis 7, **dadurch gekennzeichnet** der Dimensionssensor (14) ein Laser-, Infrarot- oder Ultraschallsensor ist, der es erlaubt, den Abstand (d) zwischen dem entsprechenden Punkt (15) der Fläche (2) und dem Dimensionssensor (14) zu bestimmen.

9. Vorrichtung nach einem der Ansprüche 1 bis 7, **dadurch gekennzeichnet, dass** der Dimensionssensor (14) mindestens zwei Kameras und Datenverarbeitungsmittel aufweist, die imstande sind, die von den Kameras ausgegebenen Daten zu sammeln und durch Stereoskopie die Position jedes abgetasteten Punkts zu berechnen.

10. Vorrichtung nach einem der Ansprüche 1 bis 9, **dadurch gekennzeichnet, dass** die Bildaufnahmemittel eine Digitalkamera (12) aufweisen.

11. Verfahren zum Messen und Darstellen der Geräuschquellen (19) innerhalb eines von einer Fläche (2) begrenzten Raums (1), **dadurch gekennzeichnet, dass** es die folgenden Schritte umfasst:
- Positionieren einer mobilen Gruppe, die einen mit Bildaufnahmemitteln (12) verbundenen Dimensionssensor (14) aufweist, innerhalb des Raums (1),
- Abtasten mindestens eines Abschnitts des Raums (1) mit Hilfe der mobilen Gruppe derart, dass der Dimensionssensor (14) beim Abtasten die Position einer Vielzahl von Punkten (15) der Fläche (2) bestimmt und dass die Bildaufnahmemittel (12) mindestens ein Bild einer Zone (13) der Fläche (2) registrieren, wobei jedes Bild mindestens einer Koordinate zugeordnet ist, was erlaubt, die Position des Bilds im Verhältnis zu der Fläche (2) abzuleiten,
- Rekonstruieren der dreidimensionalen Geometrie der Fläche (2) und einer Textur Anwenden auf die Geometrie, die von der Kombination der Bilder gebildet wird, wobei jedes Bild in Abhängigkeit der verbundenen Koordinaten auf der Geometrie positioniert ist,
- Durchführen einer akustischen oder Schwingungsmessung mit Hilfe eines Messsystems (3, 5), das innerhalb des Raums (1) positioniert ist und dessen Position im Verhältnis zu der mobilen Gruppe bestimmt ist,
- Erzeugen eines Hologramms der Geräuschquellen (19), das heißt einer Verteilung der akustischen oder Schwingungsdrücke, -intensitäten oder - beschleunigungen an verschiedenen Punkten der Fläche (2), ausgehend von den Messungen, die von dem Messsystem (3, 5) durchgeführt wurden,
- Anwenden des Hologramms der Geräuschquellen auf die berechnete Geometrie der Fläche (2) und auf die Textur derart, dass man eine Darstellung der Geräuschquellen innerhalb des Raums (1) erhält.

## Claims

1. A device for measuring and depicting noise sources (19) inside a space (1) delimited by a surface (2), **characterized in that** it comprises:
- a moving assembly having a dimensional sensor (14) associated with image capture means (12), the moving assembly being designed to scan at least part of the space (1), such that, during the scanning, the dimensional sensor (14) determines the position of a plurality of points (15) of the surface (2), and the image capture means (12) record at least one image of a zone (13) of said surface (2), each image being associated with at least one coordinate making it possible to deduce the position of the image in relation to the surface (2),
- means (17) designed to reconstruct the three-dimensional geometry of the surface (2) delimiting the space (1), from measurements from the dimensional sensor (14), and to apply a texture on said geometry formed by the assembly of the images, each image being positioned on said geometry as a function of the associated coordinates,
- an acoustic or vibrational measuring system (3, 5), designed to be arranged inside the space (1), the position of which is determined in relation to the moving assembly,
- means for generating a hologram of the noise sources (19), i.e. a distribution of the pressures, intensities, or acoustic or vibrational accelerations at different points of the surface (2), from measurements done by the acoustic or vibrational measurement system (3, 5),
- means designed to apply the hologram of the noise sources on the calculated geometry of the surface (2) and on the texture, so as to obtain a depiction of the noise sources inside the space (1).

2. The device according to claim 1, **characterized in that** the moving assembly comprises a stationary base on which an articulated support (6, 7) is mounted, the dimensional sensor (14) and the image capture means (12) being mounted on the articulated support (6, 7).

3. The device according to claim 2, **characterized in that** the articulated support comprises a first arm (6) pivotably mounted on the base, around the longitudinal axis (B) of the first arm (6), and a second arm (7) pivotably mounted on the first arm (6), around an axis perpendicular to the axis (B) of the first arm (6).

4. The device according to one of claims 1 to 3, **characterized in that** the measuring system comprises a plurality of vibrational and/or acoustic field sensors (5), oriented in several directions and mounted in a spherical support (3).

5. The device according to claim 4, **characterized in that** the vibrational and/or acoustic field sensors are laser vibration meters and/or microphones (5).

6. The device according to one of claims 4 or 5, **characterized in that** the spherical support (3) is fixed on the articulated support (6, 7).

7. The device according to claim 6, **characterized in that** the dimensional sensor (14) and the image capture means (12) are mounted at the outer surface (4) of the spherical support (3).

8. The device according to one of claims 1 to 7, **characterized in that** the dimensional sensor (14) is an infrared or ultrasound laser sensor, making it possible to determine the distance (d) between the corresponding point (15) of the surface (2) and said dimensional sensor (14).

9. The device according to one of claims 1 to 7, **characterized in that** the dimensional sensor (14) comprises at least two cameras and means for processing data capable of collecting the data from the cameras and calculating, by stereoscopy, the position of each scanned point.

10. The device according to one of claims 1 to 9, **characterized in that** the image capture means comprise a digital camera (12).

11. A method for measuring and depicting noise sources (19) inside a space (1) delimited by a surface (2), **characterized in that** it comprises the following steps:
- positioning, inside the space (1), a moving assembly comprising sensor (14) associated with image capture means (12),
- scanning at least part of the space (1) using a moving assembly, such that, during scanning, the dimensional sensor (14) determines the position of a plurality of points (15) of the surface (2), and such that the image capture means (12) record at least one image of a zone (13) of said surface (2), each image being associated with at least one coordinate making it possible to deduce the position of the image in relation to the surface (2),
- reconstructing the three-dimensional geometry of the surface (2) and applying a texture on said geometry formed by the assembly of the images, each image being positioned on said geometry as a function of the associated coordinates,
- performing an acoustic or vibrational measurement using a measuring system (3, 5) positioned inside the space (1), and whereof the position in relation to the moving assembly is determined,
- generating a hologram of the noise sources (19), i.e. a distribution of pressures, intensities, or acoustic or vibrational accelerations at different points of the surface (2), from measurements done by the measuring system (3, 5),
- applying the hologram of the noise sources on the calculated geometry of the surface (2) and on the texture, so as to obtain a depiction of the noise sources inside the space (1).
